**Europäisches Patentamt**

**European Patent Office**

**Office européen des brevets**

(11) Veröffentlichungsnummer : **0 383 987 B1**

## (12) EUROPÄISCHE PATENTSCHRIFT

(45) Veröffentlichungstag der Patentschrift :
**02.09.92 Patentblatt 92/36**

(51) Int. Cl.$^5$ : **B65G 69/28**

(21) Anmeldenummer : **89103325.0**

(22) Anmeldetag : **24.02.89**

(54) **Antriebsmechanismus für Überfahrbrücken für Rampen.**

(43) Veröffentlichungstag der Anmeldung :
**29.08.90 Patentblatt 90/35**

(45) Bekanntmachung des Hinweises auf die
Patenterteilung :
**02.09.92 Patentblatt 92/36**

(84) Benannte Vertragsstaaten :
**AT BE CH DE ES FR GB GR IT LI LU NL SE**

(56) Entgegenhaltungen :
**DE-B- 1 048 535**
**FR-A- 2 133 970**

(73) Patentinhaber : **VAN WIJK NEDERLAND B.V.**
**Bouwweg 14**
**NL-8243 PJ Lelystad (NL)**

(72) Erfinder : **Pereira Das Dores, Antonio**
**Archipel 36-09**
**NL-8224 HL Lelystad (NL)**

(74) Vertreter : **Beil, Hans Chr., Dr. et al**
**Beil, Wolff und Beil, Rechtsanwälte**
**Adelonstrasse 58 Postfach 80 01 40**
**W-6230 Frankfurt am Main 80 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Antriebsmechanismus für Überfahrbrücken für Rampen, ähnlich wie aus der DE-B-1.048.535 bekannt.

Ziel der Erfindung ist es, einen kostengünstigen und ohne großen Kraftaufwand zu betätigenden Bewegungsmechanismus zur Verfügung zu stellen, der sowohl bei neu einzurichtenden mechanisch betätigten Überladebrücken als auch bei bestehenden Überladebrücken eingesetzt werden kann.

Für die Bewegung der Plattform von Überladebrücken, die nicht hydraulisch oder motorgetrieben erfolgt, sind grundsätzlich 2 Systeme bekannt: Bei einem System wird die Plattform federkraft-unterstützt per Hand angehoben, während bei dem anderen System ein Verriegelungsmechanismus der Federkraft entgegenwirkt, so daß bei der Entriegelung die Plattform sich in die obere Betriebsstellung bewegt. Das erstgenannte System ist sehr aufwendig, da ein federkraft-bedienter Arm über eine Art kamm laufen muß, der regelmäßig eine komplizierte Kurvenform aufweist. Die Herstellung dieses Kamms ist danach schwierig und kostenintensiv. Hinzu kommt das Problem, daß solche Überladebrücken zu ihrer Betätigung einen erheblichen Kraftaufwand benötigen, weil das Gewicht der Brücke größer als die Federkraft sein muß. Bei dem zweiten System sind aufwendige Verriegelungsmechanismen erfoderlich, deren Verwendung sich nachteilig auf den Preis auswirken.

Diese Nachteile vermeidet der erfindungsgemäße Antriebsmechanismus, der zugleich sehr einfach konstruiert ist und ohne großen Kraftaufwand bedient werden kann.

Der erfindungsgemäße Antriebsmechanismus besteht nach Anspruch 1 aus zwei übereinander angeordneten Armen, die einerseits in einem vorzugsweise an der Rampenstirnseite angebrachten Widerlager in zwei Lagern gelagert und andererseits über einen weiteren Arm scharnierartig miteinander verbunden sind, wobei der untere der beiden erstgenannten Arme an seinem freien Ende ein Rollelement aufweist, das auf einer unter der Plattform der Überfahrbrücke angebrachten Führung läuft, und an dem die beiden erstgenannten Arme verbindenden Arm ein diesen Arm gegen die Rampe ziehendes Zugelement angreift.

Das Zugelement besteht vorzugsweise aus einer Spiralfeder und einem Stahlseil. Durch entsprechendes Spannen der Feder läßt sich die über das Rollelement auf die Überfahrbrücke einwirkende kraft so einstellen, daß diese genauso groß oder nur geringfügig kleiner ist als die kraft, die die Überfahrbrücke aufgrund ihres Eigengewichts auf dieses Rollelement ausübt. Die Überfahrbrücke, die regelmäßig ganz oder zumindest teilweise in einer Aussparung der Rampe angeordnet ist, kann dann von einer Bedienungsperson mittels eines am rampenfernen Ende der Überfahrbrücke seitlich angebrachten Bedienungselements leicht angehoben werden. Ist die Federkraft des Mechanismus geringfügig kleiner als die von der Brücke selbst ausgehende kraft, sinkt diese beim Loslassen nach unten ab und kann dann auf den zu beladenden LKW aufgelegt werden. Das Gleiche tritt ein, wenn die kraft des erfindungsgemäßen Antriebsmechanismus gleich groß wie die von der Überladebrücke ausgehende kraft ist und entweder die Bedienungsperson die Überladebrücke betritt oder die vorne an der Überladebrücke angebrachte Verlängerung, die innerhalb der Brücke zunächst angeordnet sein kann oder drehbar gelagert zunächst nach unten hängt, in die Arbeitsstellung in Verlängerung der Plattformebene herausgefahren oder geschwenkt wird. Eine andere Möglichkeit der Gestaltung besteht darin, daß man die Federkraft des Antriebsmechanismus größer als die von der Überfahrbrücke im Ruhezustand ausgehende Kraft wählt. Dann muß für den horizontalen Ruhezustand der Brücke eine Verriegelung, beispielsweise in Form eines in der Plattform angeordneten und in die Rampenaussparung eingreifenden Bolzens vorgesehen sein und ferner die Bewegung der Überfahrbrücke im entriegelten Zustand durch ein entsprechendes Begrenzungselement, das beispeilsweise ein Stahlseil sein kann, begrenzt werden. Ist die Federkraft dann so gewählt, daß sie kleiner ist als die von der Brücke mit der Verlängerung in der Arbeitsstellung ausgehenden Kraft, so sinkt die Brücke herab, sobald die Verlängerung ausgefahren wird und die Verlängerung legt sich dann auf die Plattform des zu beladenden Fahrzeugs. Das Begrenzungselement kann dann nach Einfahren der Verlängerung auch dazu benutzt werden, die Überfahrbrücke wieder in die Ruhestellung zurückzubringen.

Eine weitere Möglichkeit besteht darin, die Federkraft so groß zu wählen, daß sie größer ist als die von der Brücke mit ausgefahrener Verlängerung ausgehende Kraft. Dann muß am rampenfernen Ende der Überladebrücke eine Bremsvorrichtung vorgesehen werden, die manuell entriegelt werden kann und in diesem Zustand die Bewegung der Überfahrbrücke nach oben begrenzt. Im verriegelten Zustand muß diese Bremse beim Absenken der Brücke, etwa durch Belastung der Brücke mit der Bedienungsperson oder mit dem Transportfahrzeug für das zu verladende Gut, die Brücke in der Stellung halten, in der sie sich am Ende des Bewegungsvorgangs befand. Gleichzeitig muß diese Bremsvorrichtung jedoch auch im verriegelten Zustand die Bewegung der Überladebrücke nach oben erlauben, wenn die auf die Brücke am vorderen Ende von unten einwirkende Kraft einen bestimmten Wert überschreitet. Dies ist beispeilsweise dann notwendig, wenn über die Überfahrbrücke ein Lastkraftwagen mit einem Gabelstapler beladen wird. Fährt ein solcher Gabelstapler mit Ware über die Ladebrücke in Richtung auf den LKW, drückt die Ladebrücke wegen des darauf lastenden Gewichts auch die Ladefläche des LKW nach unten. Die Überladebrücke bleibt wegen des vorstehend beschriebenen Mechanismus zunächst in dieser Stellung. Verläßt der Gabelstapler die Ladebrücke nach Beendigung des Ladevorgangs wieder, so sind die Federn des LKW entlastet und der LKW drückt gegen die Ladebrücke. Diese muß sich dann mit der Ladefläche des LKW nach oben bewegen können.

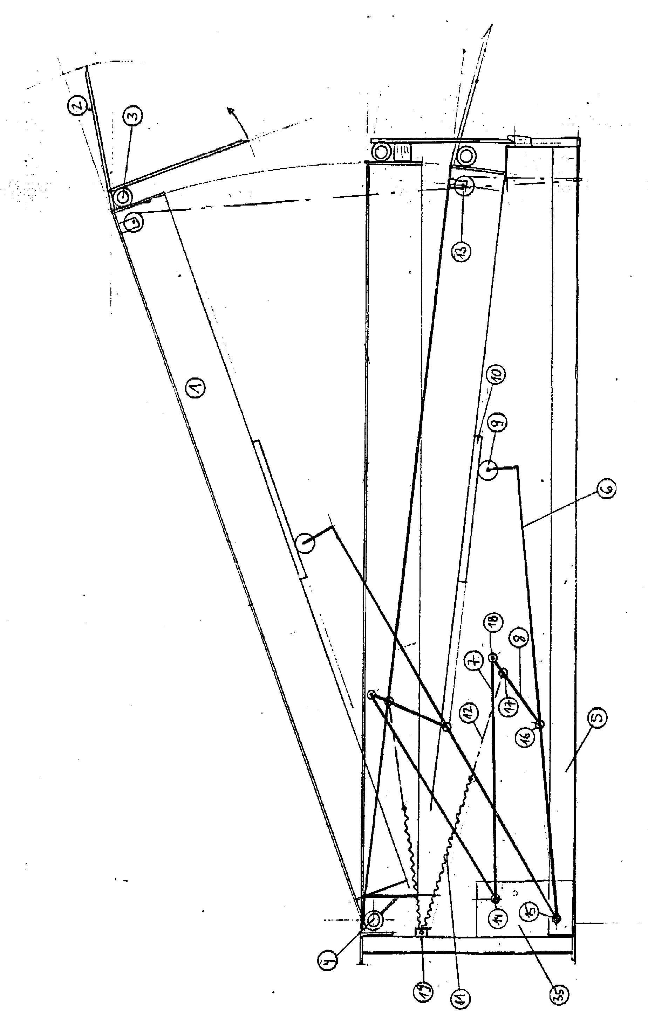

Anhand der beigefügten Zeichnung, die einen Längsschnitt über eine Überfahrbrücke in oberster und unterster Betriebsstellung sowie in Ruhestellung zeigt, wird die Erfindung näher erläutern.

Die um eine Achse (4) am rampenseitigen Ende verschwenkbare Brückenplattform (1) weist im gezeigten Fall eine um die Achse (3) ein- und ausklappbare Verlängerung (2) auf. Im gezeigten Fall weist die Überladebrücke einen Rahmen (5) auf, der in die Aussparung der Rampe eingesetzt wird und im vorderen Teil an sich bekannte Vorrichtungen zur Lagerung der Überfahrbrücke in der Ruhestellung aufweist. Erfindungsnotwendig ist dieser Rahmen jedoch nicht. An dem rampenseitigen Ende des Rahmens oder an der Stirnwand der Rampenaussparung selbst ist ein Widerlager (35) befestigt, an dem die Lager (14) und (15) angebracht sind, um die die übereinander geordneten Arme (6) und (7) drehbar sind. Der Arm (6) trägt an seinem freien Ende ein Rollelement (9), das über die an der Plattform befestigte Führung (10) läuft und die Plattform nach oben drücken kann. Das Rollelement kann ein Rad oder eine Rolle sein und die Führung ist dann eine Stahlplatte. Wählt man als Rollelement eine Rolle mit umlaufender Nut, kann als Führung beispielsweise ein Rundstahl verwendet werden.

Die beiden Arme (6) und (7) sind durch den Arm (8) über die Gelenke (16) und (18) miteinander verbunden. An dem Arm (8) kann zwischen den Gelenken (16) und (18) an einem Punkt (17) oder außerhalb des Gelenks (18) ein Zugelement (11), (12) angreifen, dessen anderes Ende an dem rampenseitigen Rahmenteil oder der Stirnwand der Rampenaussparung in dem Widerlager (19) befestigt ist. Das Zugelement, das vorzugsweise aus einem Zugteil, wie etwa einer Zugfeder, und einem Verbindungsteil, wie etwa einem Stahlseil, besteht, kann an dem Arm (8) unmittelbar oder über einen Hebelarm angreifen.

Durch eine geeignete Wahl der Länge der Arme (6), (7) und (8) und der Drehpunkte (14), (15), (16) und (18) sowie der Befestigungspunkte (18) und (19) des Zugelements kann das Kräfteverhältnis beliebig den jeweiligen Erfordernissen angepaßt werden. Es ist auch möglich, beispielsweise den Drehpunkt (14) während des Anhebevorgangs ortsveränderlich zu gestalten. Dadurch, daß die Arme (6) und (7) über den Arm (8) bewegt werden, erhält man eine optimale Kraftverteilung und die Überfahrbrücke kann über den gesamten Bewegungsbereich mit dem gleichen Kraftaufwand angehoben werden. Die günstige Kraftverteilung erlaubt die Ausführung der Führung (10) als ebenes Stück, beispielsweise als Stahlplatte oder gerades Rundstahlstück auszuführen.

Auch die Befestigungsplatte (35) kann je nach den gewünschten Gegebenheiten in ihrer Stellung verändert und beispielsweise weiter nach vorne versetzt werden.

Das erfindungsgemäße Antriebssystem kann auch in bestehende, mechanisch betätigte Überladebrücken eingebaut werden. Die Anpassung der für die Bewegung der Überfahrbrücke notwendigen Kraft kann dann leicht durch Vergrößerung der Zugkraft des Spannelements (11), (12) erfolgen, indem man beispielsweise das Verbindungsteil (12) etwas verkürzt.

Ist die über die Rolle (10) auf die Brückenplattform (1) wirkende Kraft so gewählt, daß sie etwas größer als die auf dieses Rollelement wirkende, von der Überladebrücke (1) im eingeklappten Zustand der Verlängerung (2) ausgehende Kraft, jedoch geringer als die von der Überladebrücke (1) mit ausgeklappter Verlängerung ausgehende Kraft ist, so ist es notwendig, die Bewegung der Überladebrücke bei eingeklappter Verlängerung nach oben durch ein Begrenzungselement zu begrenzen. Dieses kann beispielsweise aus einem an der Brücke angebrachten Stahlseil bestehen, dessen anderes Ende auf eine, gegebenenfalls gegen die Aufwickelrichtung sperrbaren Aufwickelvorrichtung aufgewickelt werden kann. Gegebenenfalls kann die Brücke in der Ruhestellung auch durch geeignete Maßnahmen in der Rampenaussparung arretiert werden.

Ist die durch den erfindungsgemäßen Mechanismus auf die Überfahrbrücke wirkende Kraft größer als die von der Brücke mit ausgeklappter Verlängerung ausgehende Kraft, so ist eine geeignete Bremsvorrichtung vorzusehen. Im entriegelten Zustand erlaubt diese Bremsvorrichtung, deren Konstruktion dem Fachmann bekannt ist, die Begrenzung der Bewegung der Brücke nach oben. Wird die Brücke aus der obersten Arbeitsstellung, etwa durch Belastung nach unten bewegt, so hält die arretierte Bremsvorrichtung die Brücke in der dann am Ende des Bewegungsvorgangs erreichten Stellung. Wie schon erwähnt, muß in diesem Fall die Bremsvorrichtung bei einer bestimmten Größe einer auf die Brücke wirkenden Aufwärtskraft, die beispielsweise größer als 200 N ist, die Brückenbewegung nach oben wieder freigeben. Auch in diesem Fall ist jedoch zu vermeiden, die von dem Antriebsmechanismus ausgehende Kraft wesentlich über der von der Brücke mit ausgeklappter Verlängerung ausgehenden Kraft liegt.

Die erfindungsgemäße Vorrichtung kann nicht nur bei Überladebrücken mit ausfahr- oder ausklappbaren Verlängerungen, sondern auch bei solchen Überladebrücken benutzt werden, die ohne Verlängerungsteil auf dem zu beladenden Fahrzeug aufliegen.

**Patentansprüche**

1. Antriebsmechanismus für Überfahrbrücken für Rampen mit einer an ihrem rampenseitigen Ende um eine waagerechte Achse (4) verschwenkbaren Brückenplatte (1) und gegebenenfalls einer am rampenfernen Ende der Brückenplatte angebrachten, ein- und ausklappbaren oder ein-und ausschiebbaren Verlängerung (2) , bestehend aus

    1.1 zwei übereinander angeordneten ersten Armen (6,7), die

        1.1.1 einerseits in an einem ersten unterhalb der Überfahrbrücke befindlichen Widerlager (35) angebrachten Lagern (14) und (15) gelagert und

        1.1.2 andererseits durch einen zweiten Arm (8) über zwei Gelenke (16,18) miteinander verbunden sind, wobei

        1.1.3 der untere der ersten Arme (6) an seinem freien Ende ein Rollement (9) aufweist,

    1.2 einer an der Brückenplatte (1) angebrachten Führung für das Rollenelement (10) und

    1.3 einem einerseits in einem zweiten oberhalb des ersten Widerlagers befindlichen Widerlager (19) und andererseits an dem zweiten Arm (8) angreifenden Zugelement (11,12), welcher das Rollelement von unten gegen die Brückenplatte drückt.

2. Antriebsmechanismus nach Anspruch 1, dadurch gekennzeichnet, daß das Zugelement aus einem Zugteil (11) und einem Verbindungsteil (12) besteht.

3. Antriebsmechanismus nach Anspruch 2, dadurch gekennzeichnet, daß das Zugteil (11) eine Spiralfeder und das Verbindungsteil (12) ein Stahlseil sind.

4. Antriebsmechanismus nach einem der Ansprüche 1 bis 3, dadurch gekennzeichnet, daß das Rollelement (9) ein Rad oder eine Rolle und die Führung (10) eine Stahlplatte sind.

5. Antriebsmechanismus nach einem der Ansprüche 1 bis 3, dadurch gekennzeichnet, daß das Rollelement (9) eine Rolle mit umlaufender Nut und die Führung (10) ein Rundstahl sind.

6. Antriebsmechanismus nach einem der Ansprüche 1 bis 5,dadurch gekennzeichnet, daß das Zugelement (11,12) an dem zweiten Arm (8) zwischen den Gelenken (16 und 18) angreift.

7. Antriebsmechanismus nach einem der Ansprüche 1 bis 5, dadurch gekennzeichnet, daß das Zugelement (11,12) an einer Verlängerung des zweiten Arms (8) außerhalb des oberen der zwei Gelenke (18) angreift.

8. Antriebsmechanismus nach einem der Ansprüche 6 oder 7, dadurch gekennzeichnet, daß das Zugelement (11,12) über einen Hebelarm am zweiten Arm (8) angreift.

9. Antriebsmechanismus nach einem der Ansprüche 1 bis 8, dadurch gekennzeichnet, daß die über das Rollelement (9) auf die Überfahrbrücke wirkende Kraft gleich der oder nur geringfügig geringer als die von der Überfahrbrücke (1) mit, falls vorhanden, eingeklappter oder eingefahrener Verlängerung, auf dieses Rollelement wirkende Kraft ist.

10. Antriebsmechanismus nach einem der Ansprüche 1 bis 8, dadurch gekennzeichnet, daß

    10.1 die über das Rollelement (9) auf die Überfahrbrücke (1) wirkende Kraft größer als die von der Überfahrbrücke (1) mit eingeklappter Verlängerung auf dieses Rollelement (9) wirkende Kraft, jedoch kleiner als die von der Überfahrbrücke (1) mit ausgeklappter Verlängerung auf dieses Rollelement (9) wirkende Kraft ist und

    10.2 die Bewegung der Überfahrbrücke nach oben durch ein Begrenzungselement (13) begrenzt wird.

11. Antriebsmechanismus nach einem der Ansprüche 1 bis 8, dadurch gekennzeichnet, daß

    11.1 die über das Rollelement (9) auf die Überfahrbrücke (1) wirkende Kraft größer ist als die von der Überfahrbrücke (1), gegebenenfalls, falls vorhanden, mit ausgeklappter Verlängerung (2) auf dieses Rollelement (9) wirkende Kraft jedoch kleiner als die von dieser mit einer Person belasteten Überfahrbrücke ist, und

    11.2 ein manuell entriegelbares

    Begrenzungselement (13) vorgesehen ist, daß

        11.2.1 im entriegelten Zustand die Bewegung der Überfahrbrücke (1) nach oben begrenzt und

11.2.2 im verriegelten Zustand

11.2.2.1 eine Bewegung der Überfahrbrücke (1) nach unten nicht verhindert und die Brücke nach Beendigung einer bewegung nach unten in der jeweiligen Endstellung festhält, jedoch

11.2.2.2 eine Bewegung der Brücke nach oben erlaubt, wenn auf die Überfahrbrücke (1) oder deren Verlängerung (2) von unten über die vom Antriebsmechanismus hinausgehende Kraft hinaus eine Kraft einwirkt.

**12.** Antriebsmechanismus nach Anspruch 11, dadurch gekennzeichnet, daß die von unten auf die Brücke oder ihre Verlängerung wirkende Kraft größer als 200 N ist.

**13.** Antriebsmechanismus nach Anspruch 10 bis 12, dadurch gekennzeichnet, daß die Überfahrbrücke in der Ruhestellung arretierbar ist.

**14.** Antriebsmechanismus nach Anspruch 13, dadurch gekennzeichnet, daß die Arretierung durch einen von Hand bewegbaren, in der Brückenplattform (1) nach ihrem rampenfernen Ende angebrachten und in den Brückenrahmen oder die Rampenaussparung eingreifenden Bolzen erfolgt.

## Claims

**1.** A driving mechanism for loading bridges for ramps with a bridge plate (1) pivotable at its ramp-side end about a horizontal axis (4) and optionally an extension (2), which is arranged at the end of the bridge plate remote from the ramp and can be folded inwards and outwards or can slide in or out, said mechanism comprising

1.1 two superimposed first arms (6, 7), which

1.1.1 are mounted at one end in bearings (14) and (15) arranged on a first abutment (35) disposed beneath the loading bridge and

1.1.2 are connected with one another at the other end by a second arm (8) via two hinges (16, 18),

1.1:3 the lower of the two arms (6) comprising a rolling element (9) at its free end

1.2 a guide (10) arranged on the bridge plate (1) for the rolling element and

1.3 a tensioning element (11, 12), which acts at one end upon a second abutment (19) arranged above the first abutment and at the other end upon the second arm (8) and pushes the rolling element from below against the bridge plate.

**2.** A driving mechanism according to claim 1, characterised in that the tensioning element comprises a tensioning part (11) and a connecting part (12).

**3.** A driving mechanism according to claim 2, characterised in that the tensioning part (11) is a helical spring and the connecting part (12) is a steel cable.

**4.** A driving mechanism according to one of claims 1 to 3, characterised in that the rolling element (9) is a wheel or a roller and the guide (10) is a steel plate.

**5.** A driving mechanism according to one of claims 1 to 3, characterised in that the rolling element (9) is a roller with a circumferential groove and the guide (10) is a round bar.

**6.** A driving mechanism according to one of claims 1 to 5, characterised in that the tensioning element (11, 12) acts upon the second arm (8) between the joints (16 and 18).

**7.** A driving mechanism according to one of claims 1 to 5, characterised in that the tensioning element (11, 12) acts upon an extension of the second arm (8) beyond the upper (18) of the two joints.

**8.** A driving mechanism according to one of claims 6 or 7, characterised in that the tensioning element (11, 12) acts upon the second arm (8) via a lever arm.

**9.** A driving mechanism according to one of claims 1 to 8, characterised in that the force acting upon the loading bridge via the rolling element (9) is equal to or only slightly less than the force acting upon said rolling element by the loading bridge (1) with, where present, the extension folded in or retracted.

**10.** A driving mechanism according to one of claims 1 to 8, characterised in that

10.1 the force acting upon the loading bridge (1) via the rolling element (9) is greater than the force acting upon said rolling element (9) by the loading bridge (1) with the extension folded in, but less than the force acting upon said rolling element (9) by the loading bridge (1) with the extension unfolded and

10.2 the upward movement of the loading bridge is limited by a limiting element (13).

**11.** A driving mechanism according to one of claims 1 to 8, characterised in that

11.1 the force acting upon the loading bridge (1) via the rolling element (9) is greater than the force acting upon said rolling element (9) by the loading bridge (1) with, where present, the extension unfolded but is less than the force exerted by the loading bridge when loaded by one person, and

11.2 a manually unlockable limiting element (13) is provided, which

11.2.1 in the unlocked state limits the upward movement of the loading bridge (1) and

11.2.2 in the locked state

11.2.2.1 does not prevent a downward movement of the loading bridge (1) and holds the bridge in the respective final position at the end of a downward movement, but

11.2.2.2 allows the bridge to move upwards when a force acts from below upon the loading bridge (1) or its extension resulting from the force transmitted by the driving mechanism.

**12.** A driving mechanism according to claim 11, characterised in that the force acting from below upon the bridge or its extension is greater than 200 N.

**13.** A driving mechanism according to claims 10 to 12, characterised in that the loading bridge is lockable in the inoperative position.

**14.** A driving mechanism according to claim 13, characterised in that the locking is effected by means of a bolt, which is manually displaceable, is arranged in the bridge platform (1) towards the end remote from the ramp and engages in the bridge frame or the ramp recess.

## Revendications

**1.** Mécanisme d'entraînement destiné à des passerelles de transbordement pour quais, comportant une plaque de passerelle (1) pouvant basculer autour d'un axe horizontal (4), à son extrémité située du côté du quai, et le cas échéant une rallonge (2) rapportée à l'extrémité éloignée du quai, de la plaque de passerelle, et pouvant être extraite ou escamotée par basculement ou coulissement, le mécanisme d'entraînement étant constitué

1.1 de deux premiers bras (6, 7) disposés l'un au-dessus de l'autre, et qui

1.1.1 d'un côté sont montés dans des paliers (14) et (15) sur un premier support d'appui (35) se trouvant sous la passerelle de transbordement, et

1.1.2 de l'autre côté sont reliés entre-eux par un second bras (8), par l'intermédiaire de deux articulations (16 et 18),

1.1.3 le bras inférieur (6) des premiers bras comportant à son extrémité libre un élément de roulement (9),

1.2 d'un guidage (10) pour l'élément de roulement, rapporté sur la plaque de passerelle (1), et

1.3 d'un élément de traction (11, 12) qui agit d'un côté sur un second support d'appui (19) situé au-dessus du premier support d'appui, et de l'autre côté sur le second bras (8), et qui applique l'élément de roulement (9) sous la plaque de passerelle.

**2.** Mécanisme d'entraînement selon la revendication 1, caractérisé en ce que l'élément de traction est constitué par une partie de traction (11) et par une partie de liaison (12).

**3.** Mécanisme d'entraînement selon la revendication 2, caractérisé en ce que la partie de traction (11) est constituée par un ressort hélicoïdal et la partie de liaison (12) par un câble d'acier.

**4.** Mécanisme d'entraînement selon l'une des revendications 1 à 3, caractérisé en ce que l'élément de roulement (9) est constituée par une roue ou un galet et le guidage (10) par une plaque d'acier.

**5.** Mécanisme d'entraînement selon l'une des revendications 1 à 3, caractérisé en ce que l'élément de roulement (9) est constitué par un galet à rainure périphérique, et le guidage (10) par une barre d'acier ronde.

6. Mécanisme d'entraînement selon l'une des revendications 1 à 5, caractérisé en ce que l'élément de traction (11, 12) agit sur le second bras (8), entre les articulations (16 et 18).

7. Mécanisme d'entraînement selon l'une des revendications 1 à 5, caractérisé en ce que l'élément de traction (11, 12) agit au niveau d'un prolongement du second bras (8), au-delà de l'articulation (18) la plus haute.

8. Mécanisme d'entraînement selon l'une des revendications 6 ou 7, caractérisé en ce que l'élément de traction (11, 12) agit par l'intermédiaire d'un bras de levier sur le second bras (8).

9. Mécanisme d'entraînement selon l'une des revendications 1 à 8, caractérisé en ce que la force agissant sur la passerelle de transbordement par l'intermédiaire de l'élément de roulement (9), est égale ou seulement très légèrement inférieure à celle qu'exerce sur cet élément de roulement, la passerelle de transbordement (1) dont la rallonge, si celle-ci existe, est escamotée par basculement ou coulissement.

10. Mécanisme d'entraînement selon l'une des revendications 1 à 8, caractérisé en ce que
10.1 la force agissant sur la passerelle de transbordement (1) par l'intermédiaire de l'élément de roulement (9), est supérieure à celle exercée sur cet élément de roulement (9) par la passerelle de transbordement (1) ayant sa rallonge escamotée, mais est toutefois inférieure à celle exercée sur cet élément de roulement (9) par la passerelle de transbordement (1) ayant sa rallonge extraite, et
10.2 en ce que le mouvement de déplacement vers le haut de la passerelle de transbordement, est limité par un élément de limitation (13).

11. Mécanisme d'entraînement selon l'une des revendications 1 à 8, caractérisé en ce que
11.1 la force agissant sur la passerelle de transbordement (1) par l'intermédiaire de l'élément de roulement (9), est supérieure à celle exercée sur cet élément de roulement (9) par la passerelle de transbordement (1), le cas échéant, ayant sa rallonge escamotée si celle-ci existe,, mais est toutefois inférieure à celle exercée par cette passerelle de transbordement chargée d'une personne, et
11.2 en ce qu'il est prévu un élément de limitation (13) déverrouillable manuellement, qui
11.2.1 à l'état déverrouillé limite le mouvement de la passerelle de transbordement (1) vers le haut, et
11.2.2 à l'état verrouillé,
11.2.2.1 n'empêche pas un mouvement de la passerelle de transbordement (1) vers le bas, et maintient la passerelle, après l'achèvement d'un mouvement vers le bas, dans la position finale considérée, mais
11.2.2.2 permet toutefois un mouvement de la passerelle vers le haut, lorsqu'une force supérieure à celle émanant du mécanisme d'entraînement, agit par le dessous sur la passerelle de transbordement (1) ou sur sa rallonge (2).

12. Mécanisme d'entraînement selon la revendication 11, caractérisé en ce que la force agissant par en-dessous sur la passerelle ou sa rallonge, est supérieure à 200 N.

13. Mécanisme d'entraînement selon les revendications 10 à 12, caractérisé en ce que la passerelle de transbordement peut être bloquée dans la position de repos.

14. Mécanisme d'entraînement selon la revendication 13, caractérisé en ce que le blocage s'effectue au moyen d'une broche qui peut être manoeuvrée à la main, qui est rapportée sur la plate-forme de passerelle (1) en direction de son extrémité éloignée du quai, et qui s'engage dans le châssis de passerelle ou dans l'évidement du quai.